# FASCICULE DE BREVET EUROPEEN

(11) **EP 1 689 680 B1**
(45) Date de publication et mention de la délivrance du brevet: **31.07.2013**
(21) Numéro de dépôt: 04805646.9
(22) Date de dépôt: 06.12.2004
(51) Int. Cl.: C01G 1/02, C01G 1/12, C01G 11/02, C01G 23/00, C01G 23/047, C01G 51/00, C01G 53/11

(54) **SYNTHESE DE NANOPARTICULES A STRUCTURE FERMEE DE CHALCOGENURES DE METAUX DE STRUCTURE CRISTALLOGRAPHIQUE LAMELLAIRE ET LEURS APPLICATIONS**
SYNTHESE VON NANOPARTIKELN MIT GESCHLOSSENER STRUKTUR AUS METALLCHALKOGENIDEN MIT LAMELLARER KRISTALLOGRAPHISCHER STRUKTUR UND VERWENDUNGEN DAVON
SYNTHESIS OF NANOPARTICLES WITH A CLOSED STRUCTURE OF METAL CHALCOGENS HAVING A LAMELLAR CRYSTALOGRAPHIC STRUCTURE AND USES THEREOF

(30) Priorité: 04.12.2003 FR 0314259
(43) Date de publication de la demande: 16.08.2006
(73) Titulaire: Centre National de la Recherche Scientifique - CNRS, 75794 Paris Cedex 16 (FR)
(72) Inventeur: BASTIDE, Stéphane Pierre Lange, F-75011 Paris (FR); LEVY-CLEMENT, Claude, F-92220 Bagneux (FR); DUPHIL, Dominique, F-91430 Igny (FR); BORRA, Jean-Pascal, F-78460 Chevreuse (FR)
(74) Mandataire: Novagraaf Technologies
(86) Numéro de dépôt international: PCT/FR2004/003129
(87) Numéro de publication internationale: WO 2005/056479

(56) Documents cités:
- EP-A- 0 000 398
- EP-A- 0 285 339
- WO-A-01/32799
- US-A- 5 427 763
- US-A- 5 958 361
- C. THOMAZEAU, C. GEANTET, M. LACROIX, V. HARLÉ, S. BENAZETH, C. MARHIC, M. DANOT: "Two Cation Disulfide Layers in the WxMo(1-x)S2 Lamellar Solid Solution" J. SOLID STATE CHEM., vol. 160, 2001, pages 147-155, XP002293665
- P. AFANASIEV, C. GEANTET, C. THOMAZEAU, B. JOUGET: "Molybdenum polysulfide hollow microtubules grown at room temperature from solution" CHEM. COMMUN., vol. 12, 2000, pages 1001-1002, XP002293666

## Description

La présente invention concerne un procédé de synthèse de nanoparticules à structure fermée de chalcogénures de métaux de structure cristallographique lamellaire, de formule générale (I) MₐX_{b}, caractérisé en ce qu'il comprend une pyrolyse d'un aérosol liquide obtenu à partir d'une solution d'au moins un précurseur d'un métal (M) et d'un chalcogène (X), dissous dans un solvant, ledit précurseur répondant à la formule (II) (A)_{c} M(X)_{d}, ladite solution étant pulvérisée en fines gouttelettes en suspension dans un gaz vecteur, et dans les formules (I) et (II) :
- M représente un métal de transition ou un métal des groupes III, IV ou V,
- X représente un chalcogène choisi parmi l'oxygène, le soufre, le sélénium et le tellure,
- a et b représentent les proportions respectives de métal et de chalcogène dans la formule (I),
- A représente un cation,
- c et d, représentent respectivement le nombre de cations et de chalcogènes dans la formule (II),
M et X représentant un métal et un chalcogène, respectivement, d'un chalcogénure de métal MₐX_{b} de structure cristallographique lamellaire.

De tels chalcogénures, notamment les dichalcogénures de métaux de transition (MX₂), sont des matériaux utilisés industriellement dans le domaine de la lubrification et de la catalyse (en particulier pour l'hydrodésulfuration des pétroles).

En ce qui concerne les dichalcogénures, ils présentent une structure hexagonale (par exemple 2H-MoS₂) et lamellaire, c'est-à-dire constitués de plans cristallographiques orientés 001 qui constituent un assemblage de feuillets MX₂ dits de van der Waals.

Un feuillet de MX₂ est constitué d'un plan d'atomes de métal (M) pris en sandwich par deux plans d'atomes de chalcogènes (X). Au sein des feuillets, les liaisons atomiques entre M et X sont covalentes et donc solides. Par contre, les feuillets sont reliés entre eux par de faibles interactions atomiques (forces de van der Waals entre les plans de chalcogène), permettant ainsi un glissement facile perpendiculairement aux plans 001, qui est à l'origine de leur capacité de lubrification à l'état solide.

Les propriétés tribologiques de lubrifiants solides comme le graphite et les dichalcogénures MX₂ présentent un grand intérêt industriel et technologique pour réduire le frottement. Ils sont utilisés dans le cas où les lubrifiants liquides ne fonctionnent pas, ou comme additifs pour améliorer les performances des lubrifiants liquides. Par exemple MoS₂ est bien connu pour son application dans les technologies de l'industrie spatiale et dans un certain nombre de dispersions dans la graisse, les laques et comme additifs dans les huiles de moteurs, notamment dans l'industrie automobile.

Sous ultra-vide, des revêtements de MoS₂ pur et stoechiométrique, obtenus par pulvérisation solide, ont un coefficient de friction extrêmement faible, de l'ordre de 10⁻³. Pour permettre aux revêtements de MoS₂ de glisser les uns par rapport aux autres, les cristallites se réorientent avec leurs plans de base (plan de van der Waals) parallèles à la direction de glissement.

Bien que ces matériaux possèdent de remarquables propriétés anti-frottement et de glissement avec une durée de vie élevée lorsqu'ils sont utilisés sous vide, ces capacités de lubrification deviennent médiocres en présence d'humidité et/ou d'oxygène, limitant ainsi leur utilisation dans l'atmosphère terrestre. La poudre de MoS₂ présente ainsi un temps de vie très court et un coefficient de friction considérablement plus élevé, supérieur à 0,1, lorsqu'elle est utilisée dans les environnements humides et/ou oxygénés. Dans l'atmosphère ambiante, c'est-à-dire avec une humidité relative de 50 %, les plaquettes du polytype 2H ont tendance à coller sur les pièces métalliques à cause de la présence de liaisons pendantes, ce qui conduit à une détérioration et une oxydation rapide.

Le développement de nouveaux lubrifiants de meilleure qualité et de plus grande efficacité est un challenge à la fois économique et environnemental.

Récemment, il a été montré que les nanoparticules de MoS₂ et WS₂, sous leur forme fullerènes inorganiques et nanotubes, présentent des propriétés tribologiques très supérieures à celles de ces matériaux sous la forme de particules classiques (plaquettes de structure hexagonale 2H) dans un large domaine de conditions opératoires (concentration, charge, rapport charge/vitesse, température et pression...).

Les fullerènes de MoS₂ présentent un faible coefficient de friction proche de 0,04 aussi bien dans des conditions de lubrification, en tant qu'additifs dans des huiles, que comme revêtements dans des conditions d'ultra-vide. La structure fullerène présentant très peu de liaisons pendantes apporte une grande stabilité chimique même lorsque les fullerènes sont en contact avec l'air ambiant et en particulier l'oxygène. Leur forme ronde et creuse est aussi un facteur favorable car elle permet une déformation sans rupture, du fait d'une certaine élasticité de la structure et ainsi une meilleure résistance au cours du temps.

Comme indiqué précédemment, compte tenu du caractère récent de leur découverte, les nouvelles formes de MX₂ (fullerènes et nanotubes) ne sont pas utilisées industriellement. Seule la forme classique en plaquette (2H), de différentes dimensions (de 1 à quelques centaines de microns), est utilisée massivement dans de nombreux domaines et selon différents conditionnements (poudre, additifs, coating, etc...).

De plus, il n'existe à l'heure actuelle qu'une seule méthode permettant la synthèse en quantité appréciable de phases pures de fullerènes inorganiques ou de nanotubes de MX₂. La commercialisation de ces produits (fullerènes inorganiques) est toute récente et elle est réalisée pour des quantités de l'ordre du gramme, sous le nom Nanolub^{™} par la start-up « Applied Materials ».

La méthode employée consiste à faire réagir à des températures supérieures à 800°C des nanoparticules de MO₃ = (M = Mo, W) sous forme de plaquettes ou d'aiguilles avec du sulfure ou séléniure d'hydrogène gazeux (H₂S et H₂Se). Le réacteur mis au point permet l'introduction en continu dans le four des nanoparticules de MO₃ transportées par un gaz porteur H₂/N₂. Le gaz porteur a aussi pour rôle de réduire le métal du degré d'oxydation VI au degré d'oxydation IV. Il est supposé que le mécanisme de formation des particules creuses de MX₂ met en jeu la formation d'une phase intermédiaire MX₃ amorphe.

D'autres méthodes sont en développement, mais restent à l'heure actuelle au stade de l'expérimentation en laboratoire.

Par exemple la demande WO 00/66485 concerne la synthèse de nanotubes de chalcogénures de métaux de transition à partir d'un métal de transition ou d'un composé contenant ledit métal de transition, par exemple un oxyde, de vapeur d'eau et d'un hydrure de chalcogène gazeux ou encore de dihydrogène et du chalcogène en phase vapeur.

Le brevet US 6 217 843 décrit un procédé de préparation, d'une part de nanoparticules d'oxydes métalliques contenant des insertions de particules métalliques, et d'autre part de structures de type fullerène inorganique, à intercalaires et/ou à inclusions métalliques. Ces structures sont dés chalcogénures métalliques obtenus à partir des nanoparticules considérées. Ce procédé consiste à chauffer un métal de groupe I à la vapeur d'eau ou par évaporation par faisceau électronique du métal de groupe I considéré avec de l'eau ou tout autre solvant approprié, en présence d'un sel de métal du groupe II. Le procédé consiste ensuite, soit à récupérer l'oxyde de métal du groupe I dopé en métal du groupe II, soit à poursuivre par une sulfuration.

La demande de brevet WO 0166676, concerne des applications des fullerènes de chalcogénure métallique et ne mentionne comme synthèse des composés que la réaction d'un hydrure de chalcogène sur un oxyde de métal de transition.

La demande de brevet WO 0104382 vise des nanoparticules de chalcogénures de métal de type fullerène inorganique comprenant une ou plusieurs couches de tailles et de formes désirées. Ces nanoparticules sont fabriquées par synthèse sonoélectrochimique en phase liquide.

La demande de brevet WO 9744278 porte un procédé de préparation de nanoparticules d'un chalcogénure de métal, par exemple de métal de transition, de type fullerène inorganique présentant une taille et une forme voulue à hauts rendements et en quantités macroscopiques. Le procédé comprend les étapes consistant à disperser des particules solides d'au moins une matière métallique non volatile ayant la taille et la forme présélectionnées, à chauffer les particules solides de la matière métallique non volatile dans une atmosphère gazeuse réductrice contenant au moins un chalcogène pendant une durée et à une température suffisantes pour permettre au précurseur de la matière métallique et du chalcogène de réagir et de former au moins une couche de chalcogénure métallique enrobant la surface de particules solides pour former les particules de type fullerène, à récupérer les quantités macroscopiques ainsi obtenues du chalcogénure métallique.

D'une manière générale, les inconvénients majeurs des techniques décrites dans l'art antérieur sont liés à l'utilisation des gaz hautement toxiques H2S et H2Se et aux faibles quantités produites, de l'ordre de quelques grammes par heure. Par ailleurs, la synthèse des fullerènes inorganiques de MoS2 et WS2 entre autres et de l'ensemble des nanoparticules de chalcogénures de métaux de transition à partir d'une réaction chimique solide/gaz ne permet pas de contrôler la taille et la forme des nanoparticules et notamment des fullerènes, ce qui affecte les performances tribologiques de ces matériaux spécialement dans des conditions de charge et de vitesse de glissement élevées.

Il est ainsi nécessaire soit d'améliorer les procédés de synthèse réactionnels en phase gazeuse, soit de développer de nouvelles voies de synthèses.

Les inventeurs ont mis au point, ce qui fait l'objet de la présente invention, un procédé de synthèse de nanoparticules **à structure fermée** de chalcogénures de métaux **de structure cristallographique lamellaire de formule générale** MₐX_{b} qui résout ces inconvénients et notamment les problèmes de toxicité des composés nécessaires à cette synthèse, tout en autorisant une production à plus grande échelle. Les inventeurs ont constaté que ces différents problèmes pouvaient tre résolus en mettant en oeuvre un procédé de synthèse basé sur la pyrolyse de précuseurs des matériaux utilisés.

Divers documents font état de cette technique.

Ainsi, le brevet US 5 427 763 rapporte la synthèse du dioxyde de vanadium sous forme de poudres par pyrolyse de spray. Ce procédé conduit toutefois à des particules de poudre dont la taille est de l'ordre du micron.

La demande WO 01/32799 concerne des dispersions de particules nanométriques, notamment de carbone, de métal, d'oxydes, de carbures ou de sulfures de métal/silicone.

La technique utilisée dans ce cas est une pyrolyse laser.

La demande EP 0 285 339 décrit l'utilisation de la technique de pyrolyse de spray pour l'obtention de particules denses d'oxydes métalliques ou de sulfures métalliques.

Le document Afanasiev et al. « Molybdenum polysulfide hollow microtubes grown at room temperature from solution", Chem. Commun., Vol. 12, 2000, pages 1001-1002 décrit que des particules nanométriques de MS₂ (M=Mo,W) en forme de nanotubes ou en forme de fullerènes sont connues dans l'art antérieur.

Les travaux des inventeurs dans ce domaine ont montré que la technique de pyrolyse de spray pouvait être utilisée pour obtenir des dérivés métalliques ayant des structures différentes de celles visées dans les documents de l'état de la technique ci-dessus.

L'invention vise donc l'application d'un procédé de pyrolyse de spray à la synthèse de nanoparticules de structure particulière.

Elle vise également les applications des nanoparticules obtenues.

L'invention a également pour but de fournir des nanoparticules sous une nouvelle morphologie.

L'invention porte donc sur un procédé de pyrolyse de spray caractérisé en ce qu'il est appliqué à la synthèse de nanoparticules à structure fermée de chalcogénures de métaux de structure cristallographique lamellaire, **de formule générale (I) MₐX_{b}**, et comprend la pyrolyse d'un aérosol liquide obtenu à partir d'une solution d'au moins un précurseur d'un métal (M) et d'un chalcogène dissous dans un solvant, ledit précurseur répondant à la formule (II) (A)_{c} M(X)_{d}, ladite solution étant pulvérisée en fines gouttelettes en suspension dans un gaz vecteur, et dans les formules (I) et (II) :
- M représente un métal de transition ou un métal des groupes III, IV ou V,
- X représente un chalcogène choisi parmi l'oxygène, le soufre, le sélénium et le tellure,
- a et b représentent les proportions respectives de métal et de chalcogène dans la formule (I),
- A représente un cation,
- c et d, représentent respectivement le nombre de cations et de chalcogènes dans la formule (II),
M et X représentant un métal et un chalcogène, respectivement, d'un chalcogénure de métal MₐX_{b} de structure cristallographique lamellaire.

Plus particulièrement, l'invention porte sur l'application à la synthèse desdites nanoparticules d'un procédé de pyrolyse comprenant les étapes suivantes :
- la formation d'une solution dudit au moins un précurseur d'un métal et d'un chalcogène, ou dudit au moins un précurseur dudit métal et dudit au moins un précurseur dudit chalcogène dans un solvant,
- la pulvérisation de la dite solution sous forme d'aérosol liquide par un nébuliseur, notamment de type pneumatique ou ultrasonique, dans lequel circule le gaz vecteur,
- l'injection de l'aérosol dans un four chauffé pour évaporer le solvant et faire réagir et/ou décomposer ledit (ou lesdits) précurseur (s) du métal et du chalcogène de manière à former les nanoparticules,
- le transport par le gaz vecteur des nanoparticules jusqu'à la sortie du four, et
- la récupération en sortie de four des nanoparticules.

Avantageusement, ledit précurseur du métal et du chalcogène contient à la fois le métal et le chalcogène.

Un tel précurseur répond en particulier à la formule (A)_{c} M(X)d dans laquelle A est un cation **choisi dans le groupe comprenant** K+, Na+ ou NH⁴+, M est un métal **de transition ou un métal des groupes III, IV ou V,** et X un chalcogène **choisi parmi l'oxygène, le soufre, le sélénium et le tellure**, c et d représentant respectivement le nombre de cations et de chalcogènes.

Dans un mode de réalisation de l'invention, ledit métal est un métal de transition **choisi parmi** Ti, Zr, Hf, V, Nb, Mo, W, Re', Ta, Co, Ni, Pt, Pd, Cr et Ru.

Dans un autre mode de réalisation de l'invention, ledit métal est un métal du groupe III de la classification périodique des éléments, comme Ga ou In.

Dans encore un autre mode de réalisation, ledit métal est un métal du groupe IV de la classification périodique des éléments. Il s'agit par exemple de Sn, Pb, Ge.

Dans encore un autre mode de réalisation, ledit métal est un métal du groupe V de la classification périodique des éléments, comme Bi.

Le chalcogène est choisi parmi l'oxygène, le soufre,le sélénium et le tellure.

Particulièrement, au moins l'un des précurseurs du métal de transition et dudit chalcogène est un tétrathiométallate ou un tétrasélénométallate.

Le métal du tétrathiométallate ou du tétrasélénométallate est avantageusement choisi parmi le molybdène et le tungstène.

Préférentiellement, ledit gaz vecteur est un gaz neutre tel que l'azote et l'argon, et/ou de l'hydrogène.

Avantageusement, ledit solvant est un solvant polaire.

Plus avantageusement encore, ledit solvant est choisi parmi l'eau et l'éthanol, ou leur mélange.

Le procédé de pyrolyse de spray tel qu'appliqué selon l'invention à la synthèse desdites nanoparticules comprend dans un premier temps la pulvérisation, sous forme d'aérosol liquide, c'est à dire en très fines gouttelettes en suspension dans un gaz, d'une solution contenant un ou des précurseurs dissous du métal et du chalcogène, à l'aide d'un nébuliseur dans lequel circule un gaz neutre (argon ou azote). L'aérosol liquide ainsi formé est ensuite injecté dans un four porté à une température élevée (typiquement plusieurs centaines de degrés), entraînant au niveau des gouttelettes d'une part l'évaporation du solvant et d'autre part la réaction ou la décomposition des précurseurs pour former des fullerènes ou nanotubes de MX₂. Ces derniers sont transportés par le gaz neutre et finalement recueillis à la sortie du four.

Le procédé de pyrolyse utilisé est basé sur la pyrolyse d'un aérosol liquide à haute température. Une solution de précurseurs réactionnels est pulvérisée à l'aide d'un gaz neutre en gouttelettes de taille micronique qui sont en suspension dans le gaz (aérosol liquide) et qui contiennent chacune une certaine quantité de précurseurs dissous. Cet aérosol liquide est injecté dans un four à haute température dans lequel s'effectue une conversion des gouttelettes en particules par pyrolyse directe, formant ainsi un aérosol solide, c'est à dire des particules en suspension dans un gaz. L'aérosol solide est transporté par le gaz vecteur et recueilli à la sortie du four sur un filtre sous forme de poudre, ou collecté par bullage dans une solution qui sera ensuite centrifugée.

De nombreux processus physiques et chimiques peuvent s'établir pendant que les gouttelettes, puis les particules, sont suspendues dans la phase gazeuse. Ils incluent: l'évaporation du solvant des gouttelettes, l'initiation de la cristallisation du soluté dans la gouttelette à l'interface solide/liquide, la réaction ou décomposition des précurseurs dans la particule, des processus de diffusion dans la particule pouvant conduire entre autre à des modifications de morphologie, l'évaporation d'espèces volatiles comme les oxydes métalliques, la condensation des particules sur les parois du four, la formation de nouvelles particules par coagulation des particules initiales.

De manière générale, les conditions opératoires, notamment en ce qui concerne la taille des nanoparticules et/ou la température et/ou le temps de résidence dans le four, sont adaptées pour favoriser de manière optimale l'obtention de structures fermées telles que définies ci-dessus. La mise en oeuvre des dispositions qui précédent, seules ou en combinaison, conduit à des nanoparticules du type fullerènes inorganiques, nanotubes ou nanoboîtes.

Lesdites nanoboîtes constituent des produits nouveaux et, à ce titre, entrent également dans le champ de l'invention. Il s'agit de parallélépipèdes droits et rectangles, fermés, généralement creux, à savoir de section essentiellement rectangulaire.

De telles nanoboîtes, et de manière générale les nanoparticules obtenues, présentent un grand intérêt dans l'élaboration de divers produits industriels, tels que catalyseurs, lubrifiants, dans le domaine médical, ou comme agents d'intercalation, par exemple pour le stockage d'hydrogène.

L'invention sera mieux comprise à la lecture de la description détaillée ci dessous donnée à titre d'exemple et en se référant aux figures 1 et 2 qui représentent des fullerènes, et aux figures 3 et 4 qui représentent, respectivement des nanoboîtes de profil ou de face.

Une solution de tétrathiométallate d'ammonium ou de tétrasélénométallate d'ammonium MX₄(NH₄)₂ avec M = molybdène (Mo) ou tungstène W au degré d'oxydation VI; X = soufre (S) ou sélénium (Se), à la concentration de 4 x 10⁻⁴ M, est pulvérisée à l'aide d'un nébuliseur de type commercial et d'un gaz neutre (Ar ou N₂). Un aérosol liquide constitué de gouttelettes de taille micronique est ainsi formé et transporté à travers un four tubulaire chauffé entre 600 et 1050 °C, par le gaz neutre de l'aérosol liquide qui sert alors de gaz porteur. La solution peut être réalisée à partir d'eau déionisée ou d'un alcool de type éthanol par exemple.

L'avantage d'utiliser un solvant alcoolisé provient de sa faible tension de surface. Sa viscosité facilite la formation de très fines gouttelettes, tandis que son faible point d'ébullition permet une évaporation aisée. A haute température s'effectue une décomposition/réaction pyrolytique de la solution contenant le précurseur MX₄(NH₄)₂.

Le pulvérisateur est une "tête de spray" en verre pour chromatographie telle que commercialisée par Bioblock Scientific. La pression optimale de gaz circulant dans le pulvérisateur est de 1,2 à 1,4 bars. Le four tubulaire de marque Thermolyne peut monter jusqu'à la température de 1200 °C par palier de 10 °C. Différents solvants tels que l'eau, l'éthanol, le méthanol ou le propanol ont été utilisés, dans lesquels ont été dissous le sel de tetrathiomolybdate (NH₄)₂MoS₄ ou de tetrathiotunsgtate (NH₄)₂WS₄ (Aldrich).

Des fullerènes sphériques de MoS₂ ont été obtenus en utilisant le solvant éthanol lorsque la pulvérisation est effectuée à 750 et 900 °C.

Des particules sphériques de 200 nm de diamètre sont observées au MEB. Elles ont un aspect granulaire. Ces même particules observées au METHR sont creuses. Elles sont formées de feuillets de MoS₂ (plans de van der Waals) fermés sur eux-mêmes. Lorsque le solvant utilisé est de l'eau distillée pulvérisée à 750 °C, les particules apparaissent formées d'un assemblage de fullerènes sphériques de quelques nm à plusieurs dizaines de nm de diamètre.

Lorsque la pulvérisation s'effectue à plus haute température, par exemple à 1050 °C, les fullerènes MoS₂ sont de plus grande taille avec un diamètre d'environ 100 nm.

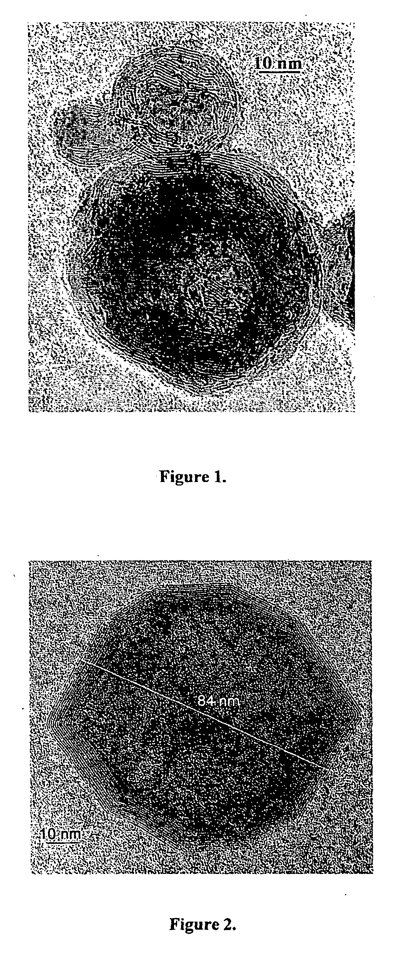

En guise d'illustration, les figures 1 et 2 montrent des fullerènes synthétisés à 900 °C à partir d'une solution éthanolique (figure 1) et aqueuse (figure 2) de (NH₄)₂MoS₄, observés par microscopie électronique en transmission à haute résolution (METHR).

Dans le cas du WS₂ formé à partir de (NH₄)₂ WS₄ dissous dans de l'éthanol pulvérisé à 750 et 900 °C, les images MEB montrent la formation de particules parallélépipédiques et le cas échéant de particules sphériques.

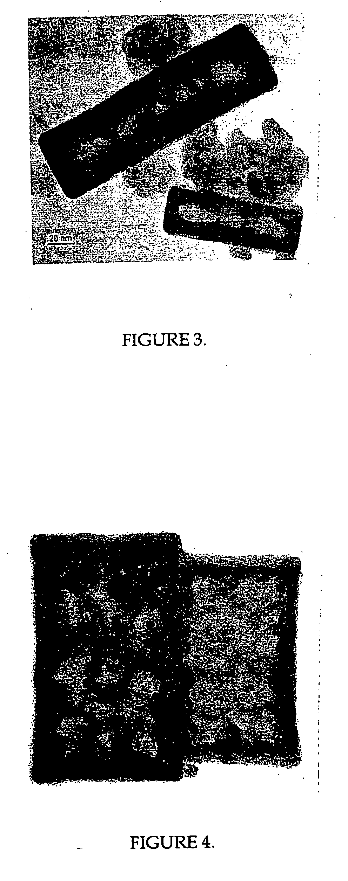

L'étude au METHR montre que ces particules, comme illustré par les figures 3 et 4, sont encadrées en totalité par des feuillets de WS₂ bien alignés. Elles contiennent des feuillets de WS₂ courbés.

La présente invention présente l'avantage de permettre la fabrication d'une grande variété de matériaux de manière avantageuse, et ce à faible coût, compte tenu du nombre réduit d'opérations à mettre en oeuvre. Le procédé de l'invention permet d'obtenir des particules de dimensions bien définies par le contrôle de la taille des gouttelettes générées par le pulvérisateur et aussi de former des particules denses ou poreuses par le contrôle de la dynamique d'évaporation des gouttelettes.

Les conditions expérimentales du procédé selon l'invention offrent donc un contrôle sur la taille, la morphologie et le degré de cristallinité des nanoparticules formées et donc leurs propriétés physiques, mécaniques optiques, électroniques et catalytiques.

## Revendications

1. Procédé de synthèse de nanoparticules à structure fermée de chalcogénures de métaux de structure cristallographique lamellaire, de formule générale (I) MₐX_{b}, **caractérisé en ce qu'**il comprend une pyrolyse d'un aérosol liquide obtenu à partir d'une solution d'au moins un précurseur d'un métal (M) et d'un chalcogène (X), dissous dans un solvant, ledit précurseur répondant à la formule (II) (A)_{c} M(X)_{d}, ladite solution étant pulvérisée en fines gouttelettes en suspension dans un gaz vecteur, et dans les formules (I) et (II) :
- M représente un métal de transition ou un métal des groupes III, IV ou V,
- X représente un chalcogène choisi parmi l'oxygène, le soufre, le sélénium et le tellure,
- a et b représentent les proportions respectives de métal et de chalcogène dans la formule (I),
- A représente un cation,
- c et d, représentent respectivement le nombre de cations et de chalcogènes dans la formule (II),
M et X représentant un métal et un chalcogène, respectivement, d'un chalcogénure de métal MₐX_{b} de structure cristallographique lamellaire.

2. Procédé selon la revendication 1 **caractérisé en ce qu'**il comprend les étapes suivantes :
- la formation d'une solution dudit au moins un précurseur d'un métal et d'un chalcogène, ou dudit au moins un précurseur dudit métal et dudit au moins un précurseur dudit chalcogène dans un solvant,
- la pulvérisation de la dite solution sous forme d'aérosol liquide par un nébuliseur, notamment de type pneumatique ou ultrasonique, dans lequel circule le gaz vecteur,
- l'injection de l'aérosol dans un four chauffé pour évaporer le solvant et faire réagir et/ou décomposer ledit (ou lesdits) précurseur (s) du métal et du chalcogène de manière à former les nanoparticules,
- le transport par le gaz vecteur des nanoparticules jusqu'à la sortie du four, et
- la récupération en sortie de four des nanoparticules.

3. Procédé selon la revendication 1 ou 2, **caractérisé en ce que** ledit précurseur du métal et du chalcogène contient à la fois le métal et le chalcogène.

4. Procédé selon la revendication 3, **caractérisé en ce que** ledit précurseur répond à la formule (A)_{c} M(X)_{d} dans laquelle A est un cation choisi dans le groupe comprenant K⁺,Na⁺, ou NH₄⁺,.

5. Procédé selon l'une quelconque des revendications 1 à 4, **caractérisé en ce que** ledit métal est un métal de transition choisi parmi Ti, Zr, Hf, V, Nb, Ta, Mo, W, Re, Co, Ni, Pt, Pd, Cr et Ru.

6. Procédé selon l'une quelconque des revendications 1 à 4, **caractérisé en ce que** ledit métal appartient au groupe III de la classification périodique des éléments comme Ga et In.

7. Procédé selon l'une quelconque des revendications 1 à 4, **caractérisé en ce que** ledit métal est un métal du groupe IV de la classification périodique des éléments, notamment Sn, Pb, ou Ge.

8. Procédé selon l'une quelconque des revendications 1 à 4, **caractérisé en ce que** ledit métal est un métal du groupe V de la classification périodique des éléments comme Bi.

9. Procédé selon l'une quelconque des revendications 1 à 8, **caractérisé en ce que** le chalcogène est choisi parmi l'oxygène, le soufre, le sélénium ou le tellure.

10. Procédé selon l'une quelconque des revendications 4 ou 9, **caractérisé en ce que** ledit précurseur est un tétrathiométallate ou un tétrasélénométallate.

11. Procédé selon la revendication 10, **caractérisé en ce que** le métal est le molybdène ou le tungstène.

12. Procédé selon l'une quelconque des revendications 1 à 11, **caractérisé en ce que** ledit gaz vecteur est un gaz neutre choisi parmi l'azote et l'argon, et/ou de l'hydrogène.

13. Procédé selon l'une quelconque des revendications 1 à 12, **caractérisé en ce que** ledit solvant est un solvant polaire, en particulier l'eau et/ou l'éthanol.

14. Procédé selon l'une quelconque des revendications précédentes, **caractérisé en ce que** lesdites nanoparticules sont des nanotubes, des fullerènes et/ou des nanoboîtes.

15. Nanoparticules de chalcogènures de métaux de formule MX₂ susceptibles d'être obtenues par un procédé selon l'une quelconque des revendications 1 à 14, dans laquelle formule M représente un métal de transition ou un métal des groupes III, IV ou V, et X représente un chalcogène choisi parmi l'oxygène, le soufre, le sélénium et le tellure, **caractérisées en ce qu'**elles se présentent sous forme de nanoboîtes constituées de parallélépipèdes droits et rectangles, fermés, généralement creux.

## Patentansprüche

1. Verfahren zur Synthese von Nanopartikeln mit geschlossener Struktur aus Metallchalkogeniden mit lamellarer kristallographischer Struktur entsprechend der allgemeinen Formel (I) MₐX_{b}, **dadurch gekennzeichnet, dass** das Verfahren eine Pyrolyse eines flüssigen Aerosols umfasst, das ausgehend von einer Lösung mindestens eines Vorläufers eines Metalls (M) und eines in einem Lösungsmittel aufgelösten Chalkogens (X) erhalten wird, wobei der Vorläufer der Formel (II), (A)_{c} M(X)_{d}, entspricht und besagte Lösung in feinen, in einem Vektorgas suspendierten Tröpfchen versprüht wird, und in den Formeln (I) und (II) :
- M ein Übergangsmetall oder ein Metall der Gruppen III, IV oder V darstellt,
- X ein Chalkogen darstellt, ausgewählt unter Sauerstoff, Selen und Tellur,
- a und b jeweilige Metall- und Chalkogenanteile in der Formel (I) darstellen,
- A ein Kation darstellt,
- c und d jeweils die Anzahl der Kationen und der Chalkogene in der Formel (II) darstellen,
wobei M und X ein Metall und ein Chalkogen darstellen, jeweils eines Metallchalkogenids MₐX_{b} mit lamellarer kristallographischer Struktur.

2. Verfahren nach Anspruch 1 **dadurch gekennzeichnet, dass** es die folgenden Schritte umfasst :
- die Bildung einer Lösung aus dem mindestens einem Metall - und Chalkogenvorläufer oder dem mindestens einen Metallvorläufer und dem mindestens einen Chalgokenvorläufer in einem Lösungsmittel,
- das Versprühen der Lösung in Form eines flüssigen Aerosols durch einen Vernebler, insbesondere des pneumatischen oder Ultraschall-Typs, in dem das Vektorgas fließt,
- das Einspritzen des Aerosols in einen geheizten Ofen, um das Lösemittel zu verdampfen und den (oder die) Metall - und Chalkogenvorläufer reagieren zu lassen und/oder zu zersetzen, so dass Nanopartikel gebildet werden,
- der Transport der Nanopartikel durch das Vektorgas bis zum Ofenausgang, und
- das Wiedergewinnen der Nanopartikel am Ofenausgang.

3. Verfahren nach Anspruch 1 oder 2, **dadurch gekennzeichnet, dass** der Metall- und der Chalkogenvorläufer sowohl Metall als auch Chalkogen enthält.

4. Verfahren nach Anspruch 3, **dadurch gekennzeichnet, dass** der Vorläufer der Formel (A)_{c} M(X)_{d} entspricht, in welcher A ein Kation ist, ausgewählt aus der Gruppe umfassend K⁺, Na⁺, oder NH₄⁺.

5. Verfahren nach einem der Ansprüche 1 bis 4, **dadurch gekennzeichnet, dass** das Metall ein Übergangsmetall ist, ausgewählt aus Ti, Zr, Hf, V, Nb, Ta, Mo, W, Re, Co, Ni, Pt, Pd, Cr und Ru.

6. Verfahren nach einem der Ansprüche 1 bis 4, **dadurch gekennzeichnet, dass** das Metall, wie Ga und In, zur Gruppe III der periodischen Klassifizierung der Elemente gehört.

7. Verfahren nach einem der Ansprüche 1 bis 4, **dadurch gekennzeichnet, dass** das Metall, insbesondere Sn, Pb, oder Ge, zur Gruppe IV der periodischen Klassifizierung der Elemente gehört.

8. Verfahren nach einem der Ansprüche 1 bis 4, **dadurch gekennzeichnet, dass** dass das Metall, wie Bi, zur Gruppe V der periodischen Klassifizierung der Elemente gehört.

9. Verfahren nach einem der Ansprüche 1 bis 8, **dadurch gekennzeichnet, dass** das Chalkogen unter Sauerstoff, Schwefel, Selen oder Tellur ausgewählt wird.

10. Verfahren nach einem der Ansprüche 4 oder 9, **dadurch gekennzeichnet, dass** der Vorläufer ein Tetrathiometallat oder ein Tetraselenometallat ist.

11. Verfahren nach Anspruch 10, **dadurch gekennzeichnet, dass** das Metall Molybdän oder Wolfram ist.

12. Verfahren nach einem der Ansprüche 1 bis 11, **dadurch gekennzeichnet, dass** das Vektorgas ein neutrales Gas ist, ausgewählt unter Stickstoff und Argon und/oder Wasserstoff.

13. Verfahren nach einem der Ansprüche 1 bis 12, **dadurch gekennzeichnet, dass** das Lösemittel ein polares Lösemittel ist, insbesondere Wasser und/oder Ethanol.

14. Verfahren nach einem der vorstehenden Ansprüche, **dadurch gekennzeichnet, dass** die Nanopartikel Nanorohre, Fullerene und/oder Nanokästen sind.

15. Nanopartikel aus Metallchalkoneniden der Formel MX₂, die durch ein Verfahren nach einem der Ansprüche 1 bis 14 erhalten werden können, in welcher Formel M ein Übergangsmetall oder ein Metall der Gruppen III, IV oder V darstellt und X ein unter Sauerstoff, Schwefel, Selen und Tellur ausgewähltes Chalkogen darstellt, **dadurch gekennzeichnet, dass** sie in Form von Nanokästen vorliegen, die aus rechtwinkligen und rechteckigen, geschlossenen, in der Regel hohlen, Parallelepipeden bestehen.

## Claims

1. Process for synthesizing closed-structure nanoparticles of metal chalcogenides having a lamellar crystal structure, of general formula (I) MₐX_{b}, **characterized in that** it comprises a pyrolisis of a liquid aerosol obtained from a solution of at least a precursor of a metal (M) and a chalcogen (X) dissolved in a solvent, said precursor having the formula (II) (A)_{c} M(X)_{d}, said solution being sprayed into fine droplets in suspension in a carrier gas, and in formulas (I) and (II):
- M represents a transition metal or a metal of groups III, IV or V,
- X represents a chalcogen selected from oxygen, sulfur, selenium or tellurium,
- a and b represent the respective proportions of metal and chalcogen in formula (I),
- A represents a cation,
- c and d, respectively represent the number of cations and chalcogens in formula (II),
M and X represent a metal and a chalcogen, respectively, of a metal chalcogenide MₐX_{b} having a lamellar crystallographic structure.

2. Process according to claim 1 **characterized in that** it comprises the following steps:
- forming a solution of said at least one precursor of a metal and of a chalcogen, or said at least one precursor of said metal and said at least one precursor of said chalcogen in a solvent,
- spraying said solution in the form of a liquid aerosol by a nebulizer, such as of the pneumatic or ultrasonic type, through which the carrier gas flows,
- injecting the aerosol in a heated furnace to evaporate the solvent and react and/or decompose said precursor(s) of the metal and of the chalcogen so as to form the nanoparticles,
- carrying the nanoparticles outlet of the furnace by the carrier gas, and
- recovering of the nanoparticles at the furnace outlet.

3. Process according to claim 1 or 2, **characterized in that** said precursor of the metal and of the chalcogen contains both the metal and the chalcogen.

4. Process according to claim 3, **characterized in that** said precursor has formula (A)_{c} M (X)_{d} wherein A is a cation selected from the group comprising K⁺, Na⁺, or NH₄⁺.

5. Process according to any one of claims 1 to 4, **characterized in that** said metal is a transition metal selected from Ti, Zr, Hf, V, Nb, Ta, Mo, W, Re, Co, Ni, Pt, Pd , Cr and Ru.

6. Process according to any one of claims 1 to 4, **characterized in that** said metal belongs to group III of the periodic table of the elements such as Ga and In.

7. Process according to any one of claims 1 to 4, **characterized in that** said metal is a metal of group IV of the periodic table of the elements, such as Sn, Pb or Ge.

8. Process according to any one of claims 1 to 4, **characterized in that** said metal is a metal of group V of the periodic table of the elements such as Bi.

9. Process according to any one of claims 1 to 8, **characterized in that** the chalcogen is selected from oxygen, sulfur, selenium or tellurium.

10. Process according to any one of claims 4 or 9, **characterized in that** said precursor is a tetrathiometallate or tetraselenometallate.

11. Process according to claim 10, **characterized in that** the metal is molybdenum or tungsten.

12. Process according to any one of claims 1 to 11, **characterized in that** said carrier gas is an inert gas selected from nitrogen and argon gas, and/or hydrogen gas.

13. Process according to any one of claims 1 to 12, **characterized in that** said solvent is a polar solvent, in particular water and/or ethanol.

14. Process according to any one of the preceding claims, **characterized in that** said nanoparticles are nanotubes, fullerenes and/or nanoboxes.

15. Nanoparticles of metal chalcogenides of formula MX₂ obtainable by a process according to any one of claims 1 to 14, wherein M represents a transition metal or a metal of group III, IV or V, and X represents a chalcogen atom selected from oxygen, sulfur, selenium and tellurium, **characterized in that** they are in the form of nanoboxes made up of closed, generally hollow rectangular parallelepipeds.
